# FASCICULE DE BREVET EUROPEEN

(11) **EP 3 594 999 B1**
(45) Date de publication et mention de la délivrance du brevet: **09.04.2025**
(21) Numéro de dépôt: 19184586.6
(22) Date de dépôt: 05.07.2019
(51) Int. Cl.: G09C 1/00, H01L 23/58, H01L 27/092, H01L 27/04, H04L 9/00, H01L 21/8238

(54) **PUCE ÉLECTRONIQUE PROTÉGÉE**
GESCHÜTZTER ELEKTRONISCHER CHIP
PROTECTED ELECTRONIC CHIP

(30) Priorité: 13.07.2018 FR 1856507
(43) Date de publication de la demande: 15.01.2020
(73) Titulaire: STMicroelectronics (Rousset) SAS, 13790 Rousset (FR)
(72) Inventeur: SARAFIANOS, Alexandre, 83910 POURRIERES (FR); NICOLAS, Bruno, 13400 AUBAGNE (FR); FRONTE, Daniele, 13790 ROUSSET (FR)
(74) Mandataire: Cabinet Beaumont

(56) Documents cités:
- EP-A1- 3 159 872
- EP-A1- 3 236 496
- EP-A1- 3 301 605

## Description

### Domaine

La présente description concerne de façon générale les puces électroniques, ou puces de circuit intégré, et en particulier la protection d'une puce contre des attaques.

### Exposé de l'art antérieur

Des puces contenant des informations dont l'accès est réservé à des personnes autorisées, telles que des puces de carte bancaire, sont susceptibles d'être la cible d'attaques.

Divers types d'attaques peuvent être menées à partir de la face arrière d'une puce, opposée à celle où sont situés des circuits contenant les informations. Dans un type d'attaque par la face arrière, l'attaquant perturbe le fonctionnement des circuits, au moyen d'un laser ou par application contre la face arrière d'une sonde portée à une tension élevée. Dans ce dernier cas, le potentiel de la sonde peut être positif ou négatif, par exemple supérieur à plusieurs dizaines de volts, par exemple supérieur à de l'ordre de 50 V. L'attaquant déduit alors les informations convoitées de l'effet de ces perturbations, couramment appelées "fautes".

Le document EP 3159872 décrit une puce électronique sécurisée au moyen de multiples caissons.

Le document EP 3236496 décrit une puce électronique protégée contre des attaques en face arrière.

Le document EP 3301605 décrit une puce électronique protégée. Plus particulièrement, ce document décrit:
une puce électronique comprenant: un premier caisson à l'intérieur duquel est située une première jonction PN ;
un deuxième caisson enterré au-dessous et disjoint du premier caisson ;
une première région formant une deuxième jonction PN avec le deuxième caisson ;
un circuit pour fournir un premier signal logique en fonction d'au moins une différence de potentiel au sein de la première région ; et
au moins une zone de contact avec la première région, reliée audit circuit.

### Résumé

Un mode de réalisation pallie tout ou partie des inconvénients des puces électroniques connues.

Un mode de réalisation selon l'invention revendiquée pallie tout ou partie des inconvénients des dispositifs connus de protection contre des attaques.

Ce mode de réalisation selon la revendication 1 prévoit une puce électronique comprenant :
un premier caisson à l'intérieur duquel est située une première jonction PN ;
un deuxième caisson enterré au-dessous et disjoint du premier caisson ;
une première région formant une deuxième jonction PN avec le deuxième caisson ;
un circuit pour fournir un premier signal en fonction d'au moins une différence de potentiel au sein de la première région ; et
au moins une zone de contact avec la première région, reliée audit circuit,
ledit circuit étant configuré pour comparer un potentiel de la zone de contact avec la première région à un potentiel de polarisation de la première région et pour fournir un signal logique.

Selon un mode de réalisation, la première région est située au moins en partie sous le deuxième caisson.

Selon un mode de réalisation, la première région est située sur le deuxième caisson.

Selon un mode de réalisation, la puce comprend une deuxième région dopée formant une troisième jonction PN avec le deuxième caisson, le circuit étant configuré pour que le premier signal soit en outre fonction d'au moins une différence de potentiel au sein de la deuxième région.

Selon un mode de réalisation, la deuxième région est située sous et autour du deuxième caisson.

Selon un mode de réalisation, ledit circuit est configuré pour comparer un potentiel d'une zone de contact avec la deuxième région à un potentiel de polarisation de la deuxième région.

Selon un mode de réalisation, le circuit est configuré pour fournir en outre un deuxième signal en fonction d'au moins une différence de potentiel au sein du deuxième caisson.

Selon un mode de réalisation, ledit circuit est configuré pour comparer un potentiel d'une zone de contact avec le deuxième caisson à un potentiel de polarisation du deuxième caisson.

Selon un mode de réalisation, la zone de contact avec le deuxième caisson s'étend verticalement sur et à partir d'une partie périphérique du deuxième caisson.

Selon un mode de réalisation, la zone de contact avec le deuxième caisson forme sur le deuxième caisson un mur annulaire périphérique.

Selon un mode de réalisation, la puce comprend en outre un caisson enterré supplémentaire, situé au-dessus et disjoint du deuxième caisson, formant une jonction PN supplémentaire avec le premier caisson.

Un mode de réalisation selon la revendication 13 prévoit un procédé de détection d'attaque d'une puce électronique selon l'invention, dans lequel un niveau logique du premier signal correspond à une absence d'attaque.

Selon un mode de réalisation, un niveau logique du deuxième signal correspond à une absence d'attaque.

### Bref exposé des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue en coupe, partielle et schématique, d'un mode de réalisation d'une puce électronique ;
la figure 2 est une vue de dessus partielle et schématique d'un mode de réalisation d'une puce électronique ; et
la figure 3 représente schématiquement et en coupe une partie d'un mode de réalisation d'une puce électronique associée à un circuit de détection.

### Exposé détaillé

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, des circuits de puce électronique ne sont pas représentés, les modes de réalisation décrits étant compatibles avec la plupart des circuits courants.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des vues en coupe dans les figures.

Sauf précision contraire, les expressions "environ", "approximativement", "sensiblement", et "de l'ordre de" signifient à 10 % près, de préférence à 5 % près.

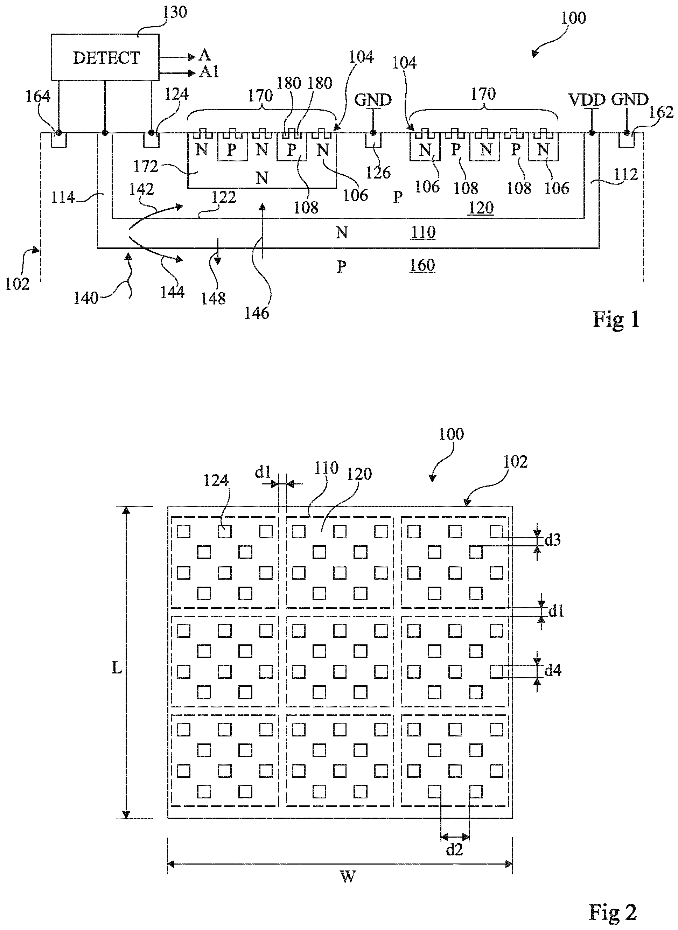

La figure 1 est une vue en coupe, partielle et schématique, d'un mode de réalisation d'une puce électronique 100.

La puce 100 comprend de préférence un substrat semiconducteur 102, par exemple en silicium. Le substrat 102 est par exemple dopé de type P.

La puce comprend des circuits de la puce à protéger contre les attaques. Les circuits comprennent par exemple des composants semiconducteurs tels que des transistors 104. Les transistors 104 sont de préférence formés dans et sur des caissons 106 et 108 juxtaposés de types de conductivité alternés. Les caissons 106 et 108 s'étendent dans le substrat 102 à partir de sa face supérieure (située du côté de la face avant de la puce).

La puce comprend en outre un caisson enterré 110, par exemple dopé de type N. Le caisson N 110 est situé sous les caissons 106 et 108. Le caisson N 110 est surmonté, par exemple à sa périphérie, de zones de contact 112 et 114. Les zones de contact 112 et 114 sont par exemple des caissons dopés de type N qui s'étendent verticalement de la face avant du substrat au caisson N 110. De préférence, la zone de contact 112 est reliée, par exemple connectée, à un noeud d'application d'un potentiel de polarisation du caisson 110, par exemple un potentiel haut d'alimentation VDD.

Le caisson enterré 110 est séparé des caissons 106 et 108 par une région 120 dopée de type P située sur le caisson enterré 110. La région P 120 est en contact avec le caisson N 110 et forme ainsi avec lui une jonction PN 122.

Dans un premier mode de réalisation, la région P 120 se prolonge jusqu'à la face avant du substrat en dehors des caissons 106 et 108. Des zones de contact 124 et 126 avec la région P 120 sont situées en dehors des caissons 106 et 108. Les zones de contact 124 et 126 sont de préférence des zones plus fortement dopées de type P que la région P 120. La zone de contact 124 est reliée à un circuit 130 (DETECT). Le circuit 130 émet un signal A en fonction de la différence de potentiel entre les zones de contact 124 et 126. Le circuit 130 est de préférence intégré dans et sur la puce.

De préférence, la zone de contact 126 est connectée à un noeud d'application d'un potentiel de polarisation de la région 120, par exemple un potentiel de référence tel que celui de la masse GND. Le signal A peut alors être obtenu par comparaison à un seuil Th1 de la différence entre le potentiel de la zone 124 et le potentiel de polarisation. A titre d'exemple, le signal A prend un niveau logique haut lorsque le potentiel de la zone de contact 124 est supérieur au seuil Th1. Le signal A peut prendre un niveau logique bas lorsque ce potentiel est inférieur au seuil Th1.

En l'absence d'attaque, le potentiel de la région 120 reste de l'ordre de celui de la masse GND, et le signal A a le niveau logique bas.

Lors d'une tentative d'attaque par la face arrière au moyen d'un faisceau laser 140, le laser génère un courant 142 à travers la jonction PN 122. Le courant 142 se dirige alors vers la zone de contact 126 reliée à la masse. Le passage du courant 142 dans la région 120, du fait de la résistance électrique de cette région, provoque une différence de potentiel entre les zones de contact 124 et 126. Les niveaux de dopage et l'agencement des régions 110 et 120 et des zones 124 et 126, ainsi que le seuil Th1, sont prévus de sorte que cette différence de potentiel dépasse alors le seuil Th1, compte tenu des propriétés du faisceau laser utilisé. A titre d'exemple, le faisceau laser a une longueur d'onde comprise entre 900 nm et 1200 nm, une intensité par exemple comprise entre 50 mW et 2000 mW, et un diamètre par exemple compris entre 1 micromètre et 30 micromètres. Le signal A passe au niveau logique haut, correspondant ainsi à la détection d'une attaque.

La puce peut ainsi être prévue pour vérifier, en cours de démarrage et/ou en fonctionnement, que la valeur du signal A est le niveau logique bas. Ceci permet de vérifier l'absence d'attaque. Lorsqu'une attaque provoque le passage au niveau logique haut du signal A, la puce peut être prévue pour prendre toute contre-mesure usuelle pour contrer l'attaque, telle que stopper son fonctionnement ou détruire des informations convoitées par l'attaquant.

Dans un deuxième mode de réalisation, la région du substrat 102 située sous le caisson 110 (région 160) se prolonge en dehors de l'aplomb du caisson 110 jusqu'à la face avant du substrat. Des zones de contact 162 et 164 avec la région 160 sont situées en dehors de l'aplomb du caisson 110. La zone de contact 164 est reliée à un circuit 130. Le circuit 130 émet un signal A en fonction de la différence de potentiel entre les zones de contact 164 et 162. La zone de contact 162 est reliée à un potentiel de polarisation (masse). A titre d'exemple, le signal A prend un niveau logique haut lorsque le potentiel de la zone de contact 164 est supérieur à un seuil Th2. Le signal A peut prendre un niveau logique bas lorsque ce potentiel est inférieur au seuil Th2.

Le fonctionnement est similaire à celui du premier mode de réalisation. En cas d'attaque par la face arrière par un laser 140, un courant 144 s'écoule à travers la jonction PN entre le caisson 110 et la région 160. Le courant rejoint la zone de contact 162 reliée à la masse. Du fait de la résistance du substrat, il s'ensuit une différence de potentiel entre les zones de contact 164 et 162, et le signal A passe à la valeur logique haute.

Les premier et deuxième modes de réalisation peuvent être combinés. La puce comprend alors à la fois des zones de contact 124 et 126 avec la région 120, et des zones de contact 162 et 164 avec la région 160. Les zones de contact 124 et 164 sont reliées au circuit 130. Le circuit 130 met le signal A à un niveau haut si au moins l'un des potentiels des zones de contact 124 et 164 devient supérieur au seuil respectif Th1, Th2. Les seuils Th1 et Th2 peuvent avoir la même valeur.

En cas d'attaque par application d'un potentiel positif sur la face arrière de la puce, le potentiel de la zone de contact 164 s'élève, tandis que celui de la région 162 reste le potentiel nul de la masse. De ce fait, le circuit 130 donne au signal A une valeur correspondant à la détection d'une attaque, par exemple un niveau logique haut. De plus, l'empilement de la région P 160, du caisson N 110 et de la région P 120 forme un transistor. Dès que le potentiel de la région 160 au contact du caisson 110 dépasse le potentiel VDD (à la tension de seuil de jonction PN près), ce transistor devient passant, et un courant 146 passe de la région 160 à la région 120. Ce courant rejoint la zone de contact 126, et la résistance de la région 120 provoque une élévation du potentiel de la zone 124, ce qui permet de détecter l'attaque.

Dans les modes de réalisation décrits ci-dessus, la zone de contact 114 avec le caisson enterré 110 est de préférence reliée au circuit 130. Le circuit 130 fournit en outre un signal A1 en fonction de la différence de potentiel entre la zone de contact 114 et la zone de contact 112 (reliée au noeud d'application du potentiel haut VDD). A titre d'exemple, le signal A1 a un niveau logique haut lorsque le potentiel de la zone de contact 114 est supérieur à un seuil Th3, et un niveau logique bas lorsque la zone de contact 114 a son potentiel inférieur au seuil Th3. Le seuil Th3 est par exemple compris entre le potentiel de la masse et le potentiel VDD. A titre de variante, le circuit 130 fournit le signal A1 en fonction de la différence de potentiel entre deux zones de contact 114 avec le caisson enterré 110.

En l'absence d'attaque, le potentiel du caisson enterré 110 est de l'ordre de VDD, et le signal A1 a le niveau logique haut.

En cas d'attaque par application d'un potentiel négatif élevé sur la face arrière, le potentiel de la zone de contact 114 devient inférieur au potentiel VDD. Pour cela, on peut prévoir que la jonction PN entre le caisson 110 et la région 160 entre en avalanche en cas d'une telle attaque. Un courant 148 circule alors du caisson 110 à la région 160. Ce courant provient de la zone de contact 112 au potentiel VDD, et provoque, du fait de la résistance du caisson 110, une différence de potentiel au sein du caisson 110. On peut aussi prévoir que cette différence de potentiel soit liée à la déplétion d'une partie du caisson N 110 située entre les zones de contact 112 et 114. Le signal A1 passe au niveau logique bas, ce qui correspond ainsi à la détection d'une attaque. La puce est prévue pour prendre alors toute contre-mesure permettant de contrer l'attaque.

De préférence, la puce est prévue pour prendre une ou des contre-mesures lorsque le signal A est au niveau logique haut ainsi que lorsque le signal A1 est au niveau logique bas. Ceci permet de protéger la puce contre toute attaque par la face arrière par laser ou par application d'un potentiel positif ou négatif élevé sur la face arrière.

Les zones de contact 112 et 114 peuvent être des plots disjoints les uns des autres. Dans une variante, les zones de contact 112 et 114 sont des parties d'un mur annulaire périphérique dopé de type N. Le mur annulaire est par exemple situé sur et en contact avec la périphérie du caisson 110. La région P 120 est alors par exemple isolée de la région P 160 par le mur annulaire et définit donc un caisson P.

Dans l'exemple représenté en figure 1, les caissons 106 et 108 sont situés dans une ou plusieurs parties 170 de la puce. A titre illustratif, deux parties 170 sont représentées, et, dans chaque partie 170, trois caissons 106 dopés de type N sont alternés avec deux caissons 108 dopés de type P. Un nombre de caissons différent de celui représenté est possible, par exemple un seul caisson 108. En pratique, le nombre de caissons 106 et 108 peut être élevé, par exemple supérieur à 100. La zone 126 peut être située entre deux parties 170 ou entourée d'une partie 170. A titre de variante, la zone de contact 124 est située entre deux parties 170 ou entourée d'une partie 170.

A titre d'exemple, la puce comprend un caisson enterré 172 situé sous et en contact avec certains des caissons 106 et 108. Dans l'exemple illustré, le caisson enterré 110 est situé sous l'ensemble d'une des parties 170. La puce peut comprendre plusieurs caissons enterrés 172, ou être dépourvue de caisson enterré 172.

Chaque transistor 104 comprend des zones dopées 180 définissant sa source et son drain. Chaque zone dopée 180 a un type de conductivité opposé à celui du caisson 106 ou 108 dans lequel la zone dopée est située. Ceci forme une jonction PN dans le caisson 106 ou 108 concerné. A titre de variante, une telle jonction PN peut être formée par tout composant, tel qu'une diode ou un thyristor, comprenant des zones dopées situées dans le caisson et ayant un type de conductivité opposé à celui du caisson.

De préférence, les caissons 106 et 108 atteignent dans le substrat 102 une profondeur par exemple comprise entre de l'ordre de 0,5 micromètre et de l'ordre de 2 micromètres, par exemple de l'ordre de 1 micromètre. Le caisson enterré 172 a de préférence une épaisseur comprise entre de l'ordre de 0,5 micromètre et de l'ordre de 2 micromètres, par exemple de l'ordre de 1 micromètre. Le caisson enterré est de préférence situé à des profondeurs de l'ordre de quelques micromètres. Le caisson enterré 110 a de préférence un niveau supérieur situé à une profondeur comprise par exemple entre de l'ordre de 3 micromètres et de l'ordre de 10 micromètres, par exemple entre 3 micromètres et 10 micromètres. Le caisson enterré a de préférence une épaisseur comprise entre de l'ordre de 1 micromètre et de l'ordre de 4 micromètres, par exemple entre 1 micromètre et 4 micromètres.

La figure 2 est une vue de dessus partielle et schématique d'un mode de réalisation d'une puce électronique. La puce de la figure 2 comprend des éléments identiques ou similaires à ceux de la puce de la figure 1, agencés de manière identique ou similaire.

Dans une portion du substrat 102, la puce comprend plusieurs caissons enterrés 110, de préférence disposés en matrice. Neuf caissons 110 sont représentés à titre d'exemple, d'autres nombres de caissons 110 étant possibles. De préférence, chaque caisson 110 vu de dessus a une forme rectangulaire ou carrée. Les distances d1 séparant les caissons voisins sont de préférence comprises entre 2 micromètres et 4 micromètres, par exemple de l'ordre de 3 micromètres. Les distances d1 sont représentées à une échelle exagérée par rapport à celle des caissons 110 et du substrat 102.

La portion de substrat 102 comprenant les caissons 110 a par exemple une longueur L et une largeur W. De préférence, la longueur L est comprise entre 0,5 mm et 2 mm, par exemple de l'ordre de 1 mm. De préférence, la largeur W est comprise entre 0,5 mm et 2 **mm,** par exemple de l'ordre de 1 **mm. De** préférence, la portion de substrat ainsi définie a la forme d'un carré.

La puce comprend plusieurs zones de contact 124 avec les régions 120 recouvrant les régions 110. Dans l'exemple illustré, la puce comprend dix zones de contact 124 au-dessus de chaque caisson enterré 110. A titre d'exemple, les zones de contact 124 sont disposées en quinconce selon des rangées. De préférence, les zones de contact 124 voisines, par exemple situées dans une même rangée, sont séparées d'une distance d2 comprise entre 75 micromètres et 150 micromètres, par exemple de l'ordre de 100 micromètres. Les rangées sont séparées d'une distance d3 par exemple comprise entre 30 micromètres et 70 micromètres, par exemple de l'ordre de 50 micromètres. Les zones de contact 124 ont en vue de dessus par exemple la forme de carrés. De préférence, la longueur d4 des côtés des carrés est comprise entre 2 micromètres et 4 micromètres, par exemple de l'ordre de 3 micromètres. Les longueurs d4 sont représentées à une échelle exagérée par rapport à celle des caissons 110 et du substrat 102.

Chaque zone de contact 124 est reliée au circuit 130, non représenté en figure 2. De préférence, le circuit 130 est configuré pour donner au signal A une valeur correspondant à une détection d'attaque lorsque le potentiel d'au moins une des zones 124 est supérieur à un seuil. On peut ainsi détecter les attaques qui se produisent à n'importe quelle position sur la face arrière.

Selon un avantage, les plots 124 et les distances entre caissons enterrés 110 permettent de protéger les circuits de la puce en utilisant une surface de substrat particulièrement faible, par exemple inférieure à 3 % de la surface du substrat.

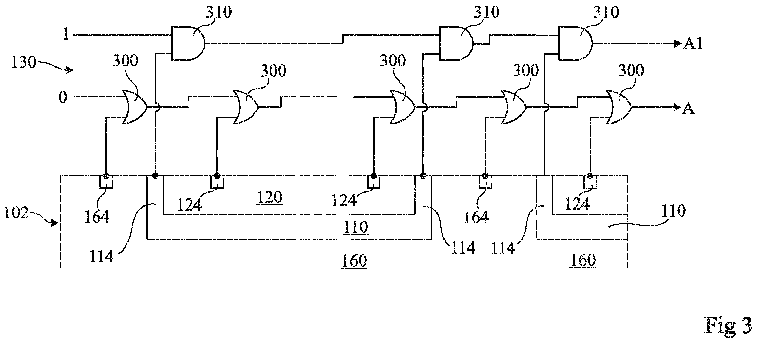

La figure 3 représente schématiquement et en coupe une partie d'un mode de réalisation d'une puce électronique associée à un exemple de circuit 130. La puce de la figure 3 comprend des éléments identiques ou similaires à ceux de la puce de la figure 1, agencés de manière identique ou similaire.

A titre d'exemple, la puce comprend plusieurs caissons enterrés 110. La puce comprend par exemple plusieurs zones de contact 164 avec les régions 160 du substrat 102 situées sous les caissons 110. Certaines des zones de contact 164 peuvent être situées entre les caissons 110 voisins. De préférence, la puce comprend plusieurs zones de contact 124 avec la région 120 située au-dessus de chaque caisson enterré 110.

Le circuit 130 comprend une chaîne de portes logiques OU 300. Chaque porte OU 300 a une première et une deuxième entrée. Chaque porte OU 300 autre que la dernière porte de la chaîne a sa sortie reliée, par exemple connectée, à la première entrée de la porte OU suivante. La première entrée de la première porte OU de la chaîne est reliée à un noeud '0' d'application d'un niveau logique bas, par exemple la masse. La dernière porte OU de la chaîne fournit le signal A. Chacune des zones de contact 164 et 124 est reliée, par exemple connectée, à une des deuxièmes entrées des portes OU 300.

Le signal A ainsi obtenu passe au niveau logique haut dès que le potentiel d'une seule des zones de contact 124 ou 164 dépasse un seuil. Ce seuil est ici compris entre les potentiels des niveaux logiques bas et haut. On détecte ainsi les attaques menées à partir de diverses positions sur la face arrière.

Selon un avantage, les portes logiques OU 300 peuvent alors être disposées en sorte d'éviter des pistes reliant chaque zone de contact à un même endroit de la puce, par exemple des pistes reliant les zones de contact aux entrées d'une porte OU commune.

De préférence, la puce comprend en outre plusieurs zones de contact 114 avec les caissons enterrés 110, le cas échéant sur chaque caisson enterré 110. Les zones de contact 114 sont par exemple réparties à la périphérie du caisson enterré 110.

Le circuit 130 peut alors comprendre en outre une chaîne de portes logiques ET 310. Chaque porte ET 310 a une première et une deuxième entrée. Chaque porte ET 310 autre que la dernière porte de la chaîne a sa sortie reliée, par exemple connectée, à la première entrée de la porte ET suivante. La première entrée de la première porte ET de la chaîne est reliée à un noeud '1' d'application d'un niveau logique haut, par exemple le potentiel VDD. La dernière porte ET de la chaîne fournit le signal A1. Chacune des zones de contact 114 est reliée, par exemple connectée, à une des deuxièmes entrées des portes ET 310.

Le signal A1 ainsi obtenu passe au niveau logique bas dès que le potentiel d'une seule des zones de contact 114 est en deçà d'un seuil. On détecte ainsi les attaques par application d'un potentiel négatif élevé à diverses positions sur la face arrière.

Divers modes de réalisation et variantes ont été décrits. L'homme de l'art comprendra que certaines caractéristiques de ces divers modes de réalisation et variantes pourraient être combinées, et d'autres variantes apparaitront à l'homme de l'art, la présente invention étant uniquement limitée par la portée des revendications. En particulier, les types de dopage des modes de réalisation décrits peuvent être inversés en échangeant les sens des différences de potentiel.

Enfin, la mise en oeuvre pratique des modes de réalisation et variantes décrits est à la portée de l'homme du métier à partir des indications fonctionnelles données ci-dessus.

## Revendications

1. Puce électronique comprenant :
un premier caisson (106, 108) à l'intérieur duquel est située une première jonction PN ;
un deuxième caisson (110) enterré au-dessous et disjoint du premier caisson ;
une première région (120 ; 160) formant une deuxième jonction PN avec le deuxième caisson ;
un circuit (130) pour fournir un premier signal (A) en fonction d'au moins une différence de potentiel au sein de la première région ; et
au moins une zone de contact avec la première région (124 ; 164), reliée audit circuit (130),
ledit circuit (130) étant configuré pour comparer un potentiel de la zone de contact avec la première région (124 ; 164) à un potentiel de polarisation de la première région (GND) et pour fournir un signal logique (A).

2. Puce électronique selon la revendication 1, dans laquelle la première région (160) est située au moins en partie sous le deuxième caisson (110).

3. Puce électronique selon la revendication 1, dans laquelle la première région (120) est située sur le deuxième caisson (110).

4. Puce électronique selon l'une quelconque des revendications 1 à 3, comprenant une deuxième région (160, 120) dopée formant une troisième jonction PN avec le deuxième caisson (110), le circuit (130) étant configuré pour que le premier signal (A) soit en outre fonction d'au moins une différence de potentiel au sein de la deuxième région.

5. Puce électronique selon la revendication 4, dans laquelle la deuxième région (160) est située sous et autour du deuxième caisson (110).

6. Puce électronique selon la revendication 4 ou 5, dans laquelle ledit circuit est configuré pour comparer un potentiel d'une zone de contact avec la deuxième région (164) à un potentiel de polarisation de la deuxième région (GND).

7. Puce électronique selon l'une quelconque des revendications 1 à 6, dans laquelle le circuit (130) est configuré pour fournir en outre un deuxième signal (A1) en fonction d'au moins une différence de potentiel au sein du deuxième caisson (110).

8. Puce électronique selon la revendication 7, dans laquelle ledit circuit (130) est configuré pour comparer un potentiel d'une zone de contact avec le deuxième caisson (114) à un potentiel de polarisation du deuxième caisson (VDD).

9. Puce électronique selon la revendication 8, dans laquelle la zone de contact avec le deuxième caisson (114) s'étend verticalement sur et à partir d'une partie périphérique du deuxième caisson (110).

10. Puce électronique selon la revendication 9, dans laquelle la zone de contact avec le deuxième caisson (114) forme sur le deuxième caisson (110) un mur annulaire périphérique.

11. Puce électronique selon la revendication 9, dans laquelle la zone de contact avec le deuxième caisson est formée de zones de contact qui sont des plots disjoints les uns des autres.

12. Puce électronique selon l'une quelconque des revendications 1 à 11, comprenant en outre un caisson enterré supplémentaire (172), situé au-dessus et disjoint du deuxième caisson (110), formant une jonction PN supplémentaire avec le premier caisson (108).

13. Procédé de détection d'attaque d'une puce électronique selon l'une quelconque des revendications 1 à 12, dans lequel un niveau logique du premier signal (A) correspond à une absence d'attaque.

14. Procédé selon la revendication 13 dans son rattachement à la revendication 7, dans lequel un niveau logique du deuxième signal (A1) correspond à une absence d'attaque.

## Patentansprüche

1. Ein elektronischer Chip, der Folgendes aufweist:
eine erste Wanne (106, 108) mit einem darin befindlichen ersten PN-Übergang;
eine zweite, vergrabene Wanne (110), die sich unter der ersten Wanne befindet und von dieser getrennt ist;
einen ersten Bereich (120; 160), der mit der zweiten Wanne einen zweiten PN-Übergang bildet;
eine Schaltung (130) zum Liefern eines ersten Signals (A) gemäß mindestens einer Potentialdifferenz innerhalb des ersten Bereichs; und
mindestens einen Kontaktbereich mit dem ersten Bereich (124; 164), der mit der Schaltung (130) gekoppelt ist,
wobei die Schaltung (130) konfiguriert ist zum Vergleichen eines Potentials des Kontaktbereichs mit dem ersten Bereich (124; 164) mit einem Potential zum Vorspannen des ersten Bereichs (GND) und zum vorsehen eines Logiksignals (A).

2. Der elektronische Chip nach Anspruch 1, wobei der erste Bereich (160) zumindest teilweise unter der zweiten Wanne (110) angeordnet ist.

3. Der elektronische Chip nach Anspruch 1, wobei der erste Bereich (120) auf der zweiten Wanne (110) angeordnet ist.

4. Der elektronische Chip nach einem der Ansprüche 1 bis 3, aufweisend einen zweiten dotierten Bereich (160, 120), der einen dritten PN-Übergang mit der zweiten Wanne (110) bildet, wobei die Schaltung (130) so konfiguriert ist, dass das erste Signal (A) ferner eine Funktion von mindestens einer Potentialdifferenz innerhalb des zweiten Bereichs ist.

5. Der elektronische Chip nach Anspruch 4, wobei der zweite Bereich (160) unter und um die zweite Wanne (110) herum angeordnet ist.

6. Der elektronische Chip nach Anspruch 4 oder 5, wobei die Schaltung konfiguriert ist zum Vergleichen eines Potentials eines Kontaktbereichs mit dem zweiten Bereich (164) mit einem Potential zum Vorspannen des zweiten Bereichs (GND).

7. Elektronischer Chip nach einem der Ansprüche 1 bis 6, wobei die Schaltung (130) ferner konfiguriert ist zum Liefern eines zweiten Signals (A1) gemäß mindestens einer Potentialdifferenz innerhalb der zweiten Wanne (110).

8. Elektronischer Chip nach Anspruch 7, wobei die Schaltung (130) konfiguriert ist zum Vergleichen eines Potential eines Kontaktbereichs mit der zweiten Wanne (114) mit einem Potential zum Vorspannen der zweiten Wanne (VDD).

9. Elektronischer Chip nach Anspruch 8, wobei sich der Kontaktbereich mit der zweiten Wanne (114) vertikal auf und von einem Umfangsabschnitt der zweiten Wanne (110) erstreckt.

10. Elektronischer Chip nach Anspruch 9, wobei der Kontaktbereich mit der zweiten Wanne (114) auf der zweiten Wanne (110) eine periphere ringförmige Wand bildet.

11. Elektronischer Chip nach Anspruch 9, wobei der Kontaktbereich mit der zweiten Wanne aus Kontaktbereichen besteht, die voneinander getrennte Kontaktstellen sind.

12. Elektronischer Chip nach einem der Ansprüche 1 bis 11, der ferner eine zusätzliche vergrabene Wanne (172) aufweist, die sich über der zweiten Wanne (110) befindet und von dieser getrennt ist und einen zusätzlichen PN-Übergang mit der ersten Wanne (108) bildet.

13. Verfahren zum Erkennen eines Angriffs auf den elektronischen Chip nach einem der Ansprüche 1 bis 12, wobei ein logischer Pegel des ersten Signals (A) einem nicht vorhandenen Angriff entspricht.

14. Verfahren nach Anspruch 13 und nach Anspruch 7, wobei ein logischer Pegel des zweiten Signals (A1) einem nicht vorhandenen Angriff entspricht.

## Claims

1. An electronic chip comprising:
a first well (106, 108) having a first PN junction located therein;
a second buried well (110) located under and separated from the first well;
a first region (120; 160) forming a second PN junction with the second well;
a circuit (130) for supplying a first signal (A) according to at least one potential difference within the first region; and
at least one area of contact with the first region (124; 164), coupled to said circuit (130),
said circuit (130) is configured to compare a potential of the area of contact with the first region (124; 164) with a potential for biasing the first region (GND) and to provide a logic signal (A).

2. The electronic chip of claim 1, wherein the first region (160) is located at least partly under the second well (110).

3. The electronic chip of claim 1, wherein the first region (120) is located on the second well (110).

4. The electronic chip of any of claims 1 to 3, comprising a second doped region (160, 120) forming a third PN junction with the second well (110), the circuit (130) being configured so that the first signal (A) is further a function of at least one potential difference within the second region.

5. The electronic chip of claim 4, wherein the second region (160) is located under and around the second well (110).

6. The electronic chip of claim 4 or 5, wherein said circuit is configured to compare a potential of an area of contact with the second region (164) with a potential for biasing the second region (GND).

7. The electronic chip of any of claims 1 to 6, wherein the circuit (130) is configured to further supply a second signal (A1) according to at least one potential difference within the second well (110).

8. The electronic chip of claim 7, wherein said circuit (130) is configured to compare a potential of an area of contact with the second well (114) with a potential for biasing the second well (VDD).

9. The electronic chip of claim 8, wherein the area of contact with the second well (114) extends vertically on top of and from a peripheral portion of the second well (110).

10. The electronic chip of claim 9, wherein the area of contact with the second well (114) forms on the second well (110) a peripheral ring-shaped wall.

11. The electronic chip of claim 9, wherein the area of contact with the second well is made of contact areas that are pads separated one from each other.

12. The electronic chip of any of claims 1 to 11, further comprising an additional buried well (172), located above and separated from the second well (110), forming an additional PN junction with the first well (108).

13. A method of detecting an attack on the electronic chip of any of claims 1 to 12, wherein a logic level of the first signal (A) corresponds to an absence of attack.

14. The method of claim 13 and of claim 7, wherein a logic level of the second signal (A1) corresponds to an absence of attack.
